# EUROPEAN PATENT APPLICATION

(11) **EP 4 556 199 A1**
(43) Date of publication of application: **21.05.2025**
(21) Application number: 23209616.4
(22) Date of filing: 14.11.2023
(51) Int. Cl.: B29C 64/124, B29C 64/241, B29C 64/245, B29C 64/255, B29C 64/336, B29C 64/35, B29C 64/379, B33Y 10/00, B33Y 30/00, B33Y 70/10, B29C 64/277, B29C 64/232, B29C 64/236

(54) **THREE-DIMENSIONAL PRINTING APPARATUS AND METHOD**

(71) Applicant: Nulty, Adam Brian, Bury, Lancashire BL9 0NT (GB); Lefkaditis, Chris, Bury Lancashire BL9 0NT (GB); Zachrisson, Patrik Magnus Fredrik, Bury Lancashire BL9 0NT (GB); Van Tonder, Quintus, Norwich NR14 8QH (GB)
(72) Inventor: Nulty, Adam Brian, Bury, Lancashire BL9 0NT (GB); Lefkaditis, Chris, Bury Lancashire BL9 0NT (GB); Zachrisson, Patrik Magnus Fredrik, Bury Lancashire BL9 0NT (GB); Van Tonder, Quintus, Norwich NR14 8QH (GB)
(74) Representative: Doherty, William

(57) **Abstract**

A three-dimensional printing apparatus (10) is provided, which is particularly suited for the production of dental structures. The apparatus (10) comprises a support base (12), a support (14), and a build platform (18) onto which a three-dimensional printing output is buildable. An actuation means is mounted to the support (14) which has a moveable head (16) to which the build platform (18) is mounted. A plurality of resin containers (20) is positioned at the support base (12) along with a curing assembly (42). The build platform (18) is moveable in three dimensions by the actuation means over the plurality of resin containers (20), and the curing assembly (42) is configured to cure resin from any resin container (20) of the plurality of resin containers (20) when the build platform (18) is positioned directly above said resin container.

## Description

The present invention relates to a three-dimensional printing apparatus, particularly but not necessarily exclusively suitable for the construction of multi-material dental structures. The invention further relates to a method of manufacture of a dental structure having a plurality of different material construction requirements using such an apparatus.

In the art, a stereolithographic printer comprises a reservoir filled with liquid resin, typically a clear and liquid plastic, with a perforated platform provided which is immersible in the resin and which can be advanced and retracted along the vertical axis towards and away from the reservoir. A high-powered ultraviolet laser or similar light screen or digital light processing projector screen is provided, with a computer controller for controlling the movement of the platform and the laser. The laser cures the resin to thereby cause the three-dimensional printing action.

The printing process commences once the CAD data is integrated into the system. Initially, the UV screen or UV laser delineates the first layer of the print into the photosensitive resin, solidifying it where it impacts. The process is meticulously repeated, layer by layer, with the platform adjusting according to the layer thickness until the object is completely printed. After completion, the object undergoes various post-processing steps to ensure stability and strength.

Such a process is entirely monolithic. Each print is uniform in its material composition and appearance.

It is an object of the present invention to reduce or substantially obviate the aforementioned problems.

According to a first aspect of the invention, there is provided a three-dimensional printing apparatus comprising: a support base; a support connected to the support base; a build platform onto which a three-dimensional printing output is buildable in-use; an actuation means mounted to the support for providing three-dimensional actuation with respect to the support base, the actuation means having a moveable head to which the build platform is mounted; a plurality of resin containers positioned at the support base; and a curing assembly associated with the plurality of resin containers therein; the build platform being moveable in three dimensions by the actuation means over the plurality of resin containers, and the curing assembly being configured to cure resin from any resin container of the plurality of resin containers when the build platform is positioned directly above said resin container.

Ordinarily, stereolithographic apparatuses have a single resin tray at the base of the three-dimensional printer, from which a build is constructed. However, the assembly is purely made using a single material. By providing translation of the build platform in the horizontal plane using an actuation means, the present invention allows for multiple different resin types to be provided within a single apparatus, and therefore a multi-material object can be assembled. This may be of particular benefit in the creation of bespoke dental structures, since this can create desirable components whilst a dental procedure is being performed. In particular, this allows for the creation of objects with unique inner structures, material properties, profiles, and translucencies. Each layer, and subsequently the overall object, can exhibit intricate and detailed optical and structural properties, unheard of in conventional 3D printing methodologies.

The three-dimensional printing apparatus may further comprise a contact sensor associated with the actuation means, which is configured to detect a relative position of the actuation means with respect to the support and/or support base.

The provision of a contact sensor allows for relative position of the build platform in particular to be determined accurately, so as to avoid any accidental collisions. This may be more important where the build platform is capable of being rotated and/or tilted.

Optionally, the build platform may be selectable from a plurality of different build platforms, each of the plurality of different build platforms being releasably engagable with the moveable head.

The ability to swap between different build platforms to alter the functionality of the apparatus expands the range of three-dimensional printing activities that can be performed.

Preferably, the actuation means may further comprise a rotatable element to permit rotation of the moveable head and/or build platform in use.

A rotatable element allows for different build configurations to be achieved which might otherwise not be possible to produce from some directions. This is a greater problem in the present arrangement in view of the greater spatial constraints conferred by the greater number of resin containers.

In one embodiment, the curing assembly may comprise a screen which is visible and/or non-visible light. Optionally, the curing assembly may comprise a said screen associated with each of the plurality of resin containers. The or each screen may be selectably replaceable having a different light-transmissibility characteristic.

The ability to use different screens of different types opens the apparatus to use with several alternative types of resin having different characteristics.

Preferably, the curing assembly may comprise a light source. Furthermore, the curing assembly may comprise a said light source associated with each of the plurality of resin containers. Optionally, the or each light source may be selectably replaceable with a light source having a different light-emitting characteristic.

As with the screens, having different types of light source will enable the apparatus to further utilise different types of resin, opening up avenues to creating more complex and intricate builds of multiple material type.

The curing assembly may further comprise a light-source occluder positioned between the light source and the plurality of resin containers.

The presence of multiple light sources means that there is a greater risk of light spill, and therefore a greater need for protection of the various resins from the different light sources. An occluder or similar opaque member can rectify this issue.

Preferably, the curing assembly may be located beneath the plurality of resin containers.

Given the need for the three-dimensional movement around the upper regions of the apparatus, it is preferred that the curing assembly be at the bottom of the apparatus.

In a preferred arrangement, the apparatus may further comprise a wash reservoir located at the support base.

Since there is transfer of the build object between different resin reservoirs, it is advisable to provide a means for preventing contamination therebetween. A wash reservoir, preferably accompanied by a drier, solves this issue.

Optionally, a shape of at least one of the resin containers may be matched to a shape of the build platform.

Shape matching of build platform to resin container may ensure that the more constrained spatial configuration at the support base is utilised in a most efficient manner.

According to a second aspect of the invention, there is provided a method of manufacture of a dental structure having a plurality of different material construction requirements, the method comprising the steps of: a] preparing a manufacturing design document for a dental structure having a plurality of different material construction requirements; and b] using a three-dimensional printing apparatus in accordance with the first aspect of the invention, printing the dental structure using a plurality of different resin materials.

The present invention is highly suited towards rapid prototyping and bespoke manufacture of dental structures, and the present invention can be implemented within a dental surgery directly.

For a better understanding of the present invention, and to show more clearly how it may be carried into effect, reference will now be made by way of example only to the accompanying drawings, in which:
Figure 1 shows a perspective representation of an embodiment of a three-dimensional printing apparatus in accordance with the first aspect of the invention; and
Figure 2 shows a pictorial view from the side of the three-dimensional printing apparatus of Figure 1.

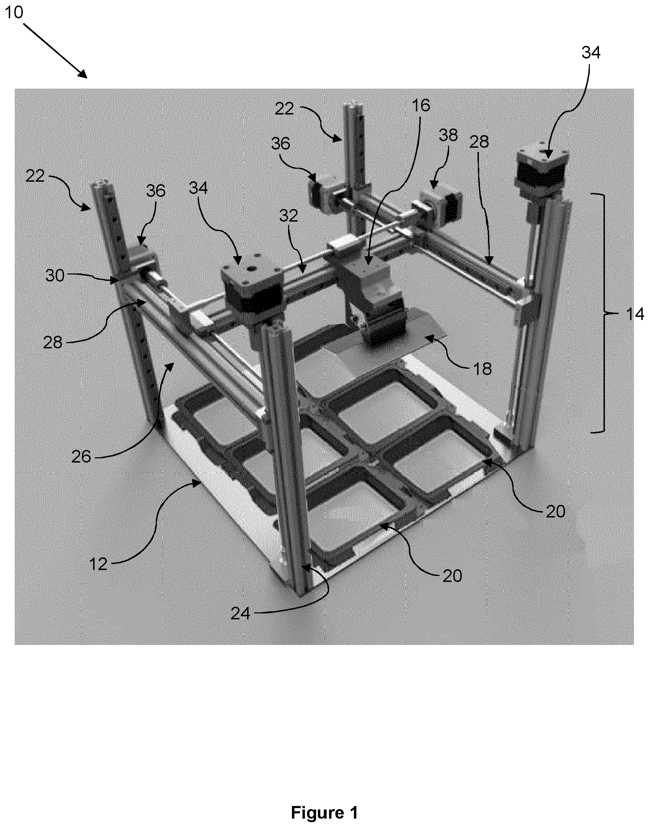

Referring firstly to Figure 1, there is indicated a three-dimensional printing apparatus, referenced globally at 10. There is a support base 12 upon which is positioned a support 14 which supports an actuation means. A moveable head 16 of the actuation means supports a build platform 18 of the apparatus 10 in-use.

A plurality of resin containers 20 is provided so as to be positioned on the support base 12, over which the moveable head 16, and by extension, build platform 18 is moveable in three dimensions.

The resin containers 20 may each be formed as open trays, within which is stored a supply of a resin material to be used as part of the printing process. A total of six such resin containers 20 is illustrated in Figure 1, and thus six different resin materials may be used as part of the three-dimensional printing procedure, typically as a stereolithography apparatus.

The support base 12 may be provided as a planar surface, so that the resin containers 20 can be easily placed thereon and removed from the support base 12, although it will be apparent that locators for the resin containers 20 could be provided, or the resin containers 20 could be integrally formed with the support base 12.

The support 14 is formed by a plurality of rail members 22, here provided at the four corners of the support base 12, upstanding therefrom. Each rail member 22 includes a keyway 24 to allow for channelled movement of another member of the actuation means along the rail.

The actuation means comprises a two-dimensional translation array 26, here including two horizontal rails 28 extending between pairs of the rail members 22 of the support 12 so as to be parallel with one another in a nominal 'x' direction, and having keyway runners 30 at either end for engaging with the keyways 24 of the rail members 22. A further bridging rail 32 is also provided which spans the said two rails 28 and which thus extends in a perpendicular, nominal `y' direction.

The actuation means 14 also comprises at least one 'z'-actuator 34, which here is connected to the two-dimensional translation array 26 to move said two-dimensional translation array 26 along the rail members 22 of the support 14 in an in-use, nominal 'z' direction. Two such 'z'-actuators 34 are indicated. The 'z'-actuator 34 is here illustrated as a screw stepper motor, though any accurate form of actuator is feasible.

The actuation means further comprises at least one 'x'-actuator 36, which allows for the `x' position of the bridging rail 32 to be adjusted along the two said horizontal rails 28. Two said 'x'-actuators 36 are provided.

The actuation means also comprises at least one 'y'-actuator 38 which is associated with the bridging rail 32. The 'y'-actuator 38 is coupled to the moveable head 16 to permit movement of the moveable head 16 along the bridging rail 32.

The actuation means, by use of the 'z'-actuators 34, 'x'-actuators 36, and 'y'-actuator 38, allows the build platform 18 of the three-dimensional printing apparatus 10 to be moved around above and towards individual resin containers 20 in three-dimensional space.

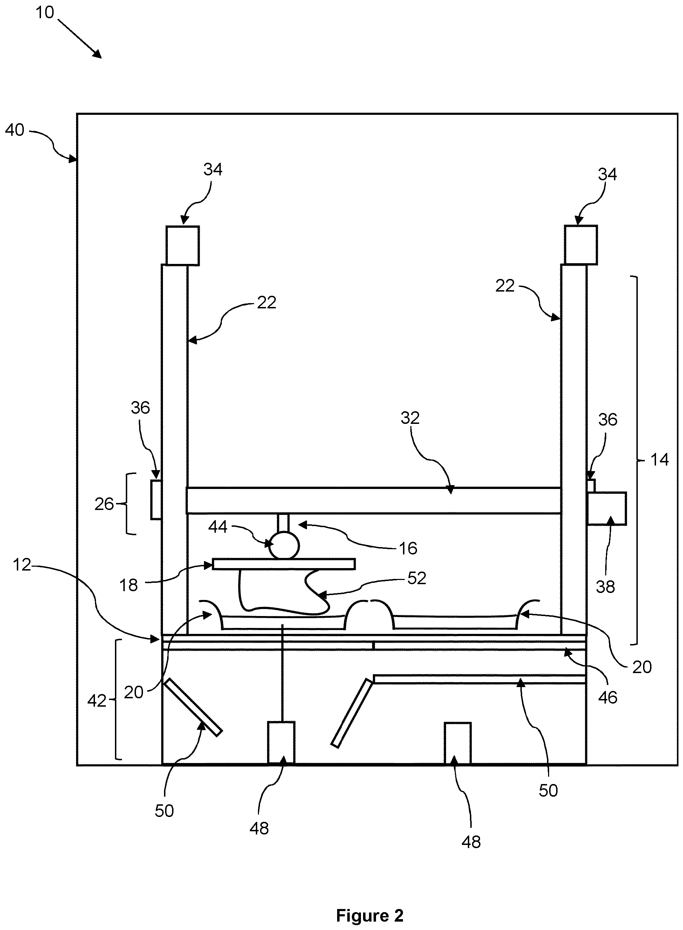

Figure 2 shows the full three-dimensional printing apparatus 10 in more detail from the side, inclusive of a curing assembly 42 which effects the curing of the resin in the resin containers 20. An indicative apparatus housing 40 is indicated around the support 14, which will likely be opaque to prevent escape of light from the three-dimensional printing apparatus 10 which could cause harm to a user.

The build platform 18 is indicated as being attached to the moveable head 16, here via a rotatable element 44. This allows for rotation, for instance, in the in-use horizontal plane, of the build platform 18 and/or moveable head 16. This may assist with construction of complicated structures.

The curing assembly 42 preferably includes a screen 46 associated with each of the resin containers 20, as well as a light source 48 associated with each of the resin containers 20. The light sources 48 are indicated as lasers in Figure 2; however any suitable visible or non-visible curing light source could be provided which is used within the art.

Whilst a single screen 46 is indicated being associated with each resin container 20, it will be appreciated that a single screen might be used which spans more than one of the resin containers 20. The screen or screens 46 may be selectably interchangeable to alter the functionality of the three-dimensional printing apparatus 10.

There may also be a light source 48 which is associated with more than one of the resin containers 20, for instance, by use of a beam splitter or similar. Each light source 48 could be inhibited by an occluder 50, which is shown as being in a non-occluding state for the left-hand light source 48 and as being in an occluding state for the right-hand light source 48. The light source or light sources 48 may be selectably interchangeable to alter the functionality of the three-dimensional printing apparatus 10.

To operate the three-dimensional printing apparatus 10, a computer controller positions the actuation means so that the build platform 18 is positioned above a resin container 20 from which the build material is to be drawn. When another resin material is required, the actuation means repositions the build platform 18 over another resin container 20 containing a different resin material.

During this process, it may be necessary to rinse the build object 52, and thus a wash reservoir may be located at the support base 12. A drier may be associated with such a wash reservoir to speed the build process.

Three-dimensional actuation of the build platform 18 to and from different resin containers 20 thus allows a multi-material build object 18 to be constructed. The greater three-dimensional movement of the build platform 18 through the three-dimensional printing apparatus 10 of the present invention when compared with the state of the art means that the use of a contact or touch sensor for determining the position of the build platform 18, either directly or indirectly via the actuation means, may be helpful for collision avoidance.

Activation of specific light sources 48 associated with specific resin containers 20 may be achieved in a desired order by control via the computer controller.

It may be desirable for the build platform to be size and/or shape matched to the resin containers 20. For instance, circular or semicircular build platforms and resin containers 20 could be provided. Each resin container 20 could also have a different shape which is most suited towards the material properties of the resin in question. For instance, a more viscous resin might require a smaller platform.

Replaceable resin containers 20 are therefore highly desirable within the present invention, and also it may be desirable to provide a selectably interchangeable build platform.

It is therefore possible to provide an apparatus capable of 3D printing an object using multiple different resin bases, using a stereolithographic technique.

The words 'comprises/comprising' and the words 'having/including' when used herein with reference to the present invention are used to specify the presence of stated features, integers, steps, or components, but do not preclude the presence or addition of one or more other features, integers, steps, components, or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various changes and modifications will be apparent to persons skilled in the art without departing from the scope of the present invention as defined by the appended claims.

## Claims

1. A three-dimensional printing apparatus (10) comprising:
a support base (12);
a support (14) connected to the support base (12);
a build platform (18) onto which a three-dimensional printing output is buildable in-use;
an actuation means mounted to the support (14) for providing three-dimensional actuation with respect to the support base (12), the actuation means having a moveable head (16) to which the build platform (18) is mounted;
a plurality of resin containers (20) positioned at the support base (12); and
a curing assembly (42) associated with the plurality of resin containers (20) therein; and
**characterized in that** the build platform (18) is moveable in three dimensions by the actuation means over the plurality of resin containers (20), and the curing assembly (42) is configured to cure resin from any resin container (20) of the plurality of resin containers (20) when the build platform (18) is positioned directly above said resin container (20).

2. A three-dimensional printing apparatus (10) as claimed in claim 1, further comprising a contact sensor associated with the actuation means, which is configured to detect a relative position of the actuation means with respect to the support (14) and/or support base (12).

3. A three-dimensional printing apparatus (10) as claimed in claim 1 or claim 2, wherein the build platform (18) is selectable from a plurality of different build platforms (18), each of the plurality of different build platforms (18) being releasably engagable with the moveable head (16).

4. A three-dimensional printing apparatus (10) as claimed in any one of the preceding claims, wherein the actuation means further comprises a rotatable element to permit rotation of the moveable head (16) and/or build platform (18) in use.

5. A three-dimensional printing apparatus (10) as claimed in any one of the preceding claims, wherein the curing assembly (42) comprises a screen (46) which is visible and/or non-visible light.

6. A three-dimensional printing apparatus (10) as claimed in claim 5, wherein the curing assembly (42) comprises a said screen (46) associated with each of the plurality of resin containers (20).

7. A three-dimensional printing apparatus (10) as claimed in claim 5 or claim 6, wherein the or each screen (46) is selectably replaceable having a different light-transmissibility characteristic.

8. A three-dimensional printing apparatus (10) as claimed in any one of the preceding claims, wherein the curing assembly (42) comprises a light source (48).

9. A three-dimensional printing apparatus (10) as claimed in claim 8, wherein the curing assembly (42) comprises a said light source (48) associated with each of the plurality of resin containers (20).

10. A three-dimensional printing apparatus (10) as claimed in claim 8 or claim 9, wherein the or each light source (48) is selectably replaceable with a light source (48) having a different light-emitting characteristic.

11. A three-dimensional printing apparatus (10) as claimed in any one or claims 8 to 10, wherein the curing assembly (42) further comprises a light-source occluder (50) positioned between the light source (48) and the plurality of resin containers (20).

12. A three-dimensional printing apparatus (10) as claimed in any one of the preceding claims, wherein the curing assembly (42) is located beneath the plurality of resin containers (20).

13. A three-dimensional printing apparatus (10) as claimed in any one of the preceding claims, further comprising a wash reservoir located at the support base (12).

14. A three-dimensional printing apparatus (10) as claimed in any one of the preceding claims, wherein a shape of at least one of the resin containers (20) is matched to a shape of the build platform (18).

15. A method of manufacture of a dental structure having a plurality of different material construction requirements, the method comprising the steps of:
a] preparing a manufacturing design document for a dental structure having a plurality of different material construction requirements; and
b] using a three-dimensional printing apparatus (10) as claimed in any one of the preceding claims, printing the dental structure using a plurality of different resin materials.
